(19) **Europäisches Patentamt**
**European Patent Office**
**Office européen des brevets**

(11) **EP 2 774 424 B1**

(12) **EUROPEAN PATENT SPECIFICATION**

(45) Date of publication and mention
of the grant of the patent:
**08.11.2017 Bulletin 2017/45**

(51) Int Cl.:
***H04W 52/02*** (2009.01)

(21) Application number: **13701285.2**

(86) International application number:
**PCT/EP2013/051571**

(22) Date of filing: **28.01.2013**

(87) International publication number:
**WO 2014/114358 (31.07.2014 Gazette 2014/31)**

(54) **A METHOD OF MINIMIZING POWER CONSUMPTION DURING OPERATION OF A BATTERY OPERATED MOBILE WIRELESS INFORMATION DEVICE**

VERFAHREN ZUR STROMVERBRAUCHSMINIMIERUNG WÄHREND DES BETRIEBS EINER BATTERIEBETRIEBENEN/DRAHTLOSEN/MOBILEN INFORMATIONSVORRICHTUNG

PROCÉDÉ DE RÉDUCTION DE LA CONSOMMATION D'ÉNERGIE PENDANT LE FONCTIONNEMENT D'UN DISPOSITIF D'INFORMATION SANS FIL MOBILE ALIMENTÉ PAR BATTERIE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**10.09.2014 Bulletin 2014/37**

(73) Proprietor: **Huawei Technologies Co., Ltd.**
**Longgang District**
**Shenzhen, Guangdong 518129 (CN)**

(72) Inventors:
• **TAO, XiaoJiao**
**SE-16440 Kista (SE)**

• **LERENIUS, Jacob**
**SE-16440 Kista (SE)**

(74) Representative: **Körber, Martin Hans**
**Mitscherlich PartmbB**
**Patent- und Rechtsanwälte**
**Postfach 33 06 09**
**80066 München (DE)**

(56) References cited:
**US-A1- 2011 207 509    US-A1- 2012 129 564**

**Description**

FIELD OF THE INVENTION

This invention relates to a method of enabling a wireless information device to automatically modify its wireless transfer related behavior. Also the invention relates to a battery operated mobile wireless information device capable of carrying out the method according to the invention. The term 'wireless information device' used in this patent specification should be expansively construed to cover any kind of device with one or two way wireless communication capabilities and includes without limitation radio telephones, smart phones, communicators, personal computers, computers and wireless enabled application specific devices such as cameras, video recorders, asset tracking systems etc. It includes devices able to communicate in any manner over any kind of network, such as WLAN, Wi-Fi, GSM or UMTS, CDMA and WCDMA mobile radio, Bluetooth, IrDA, LTE etc.

BACKGROUND OF THE INVENTION

Enabling devices to automatically alter their behavior depending on the environment or 'context' of the device is a compelling foundation of 'context aware' computing. The basic approach of context-aware resource management is to optimize the operation of a device and its use of resources based on context. One very prominent example is to maximize battery power by using context information, and another one is to switch between available networks based on the current context. They are often realized in lower layers in the operating system.

'Context' can cover device specific variables such as location, as well as end-user variables such as presence. One common strand in context aware computing is the need for the device to itself become automatically aware of its context: for example, a location aware device is typically equipped with location finding equipment, such as GPS, or the ability to acquire location information from a nearby source. Equipping a device with location awareness enables new capabilities: for example, the device could automatically turn itself off when in a location in which device operation is hazardous such as in a hospital or aircraft.

The unique habits and behavior of any specific user can provide further potentials for power saving.

Improving the overall energy efficiency of this type of wireless information device is an ongoing goal. One way of improving the overall energy efficiency is equipage of the device with novel and power saving components, the use of such components, however, increases costs of producing the devices.

The recent rise in sales of both smart-phones and other data transferring mobile units has resulted in a substantial increase in the amount of data communications passing through mobile telecommunications networks. This volumetric increase can also be attributed to enhancements made to the capabilities of the networks.

This ability to use the cellular networks for mobile data services, such as Internet browsing is resulting in subscribers treating their mobile networks in much the same way as they treat their fixed networks. That is, users are tending to expect the same service from the Internet, irrespective of their access method. However, mobile networks have a more restricted capacity and are more costly to operate, as compared to fixed networks.

Access and data volumes are likely to rise faster than the revenue used to build and maintain the networks thus abilities of improved efficiency when using mobile networks to ensure that the user experience is maintained or improved even when the networks are more heavily loaded is desirable.

Document US20120129564A1 discloses devices and methods of a communication device including initiating an initial communication via a modem in response to a data pull communication event or a data push communication event and determining by the controller a measured network condition associated with transmitting the initial communication as well as determining by the controller the power consumption of the initial communication based on a measured network condition value processed by monitoring the modem.

Document US20110207509 A1 discloses a wireless computing apparatus to send and receive wireless communications, comprising: a processor; a battery to supply power to the processor; a memory coupled to the processor to store at least one of: user pattern data or user preference data; and a power management module coupled to the processor to monitor a location of the apparatus and to suspend wireless communication according to the location and at least one of: the user pattern data or user preference data, to reduce battery consumption.

DISCLOSURE OF THE INVENTION

On this background, it is an object of the present application to provide a method of minimizing power consumption while maintaining high data transfer capabilities in battery operated mobile wireless information devices.

This object is achieved by providing a method of minimizing power consumption during operation of a battery operated mobile wireless information device having a plurality of device applications running thereon, said plurality of device applications regularly needing to communicate via the internet using wireless communication channels, said method automatically modifying a wireless transfer related behavior of the mobile wireless communication device, comprising the steps of:

a) activating a set of wireless transfer related tasks on the mobile wireless information device,

b) running a device application on said wireless information device logging:

- an activation period of each wireless transfer related task of said set of wireless transfer related tasks,
- an amount of data transferred related to each wireless transfer related task of said set of wireless transfer related tasks, and
- an associated device application related to each wireless transfer related task of said set of wireless transfer related tasks,

c) the device application grouping the set of wireless transfer related tasks into prioritized subgroups of tasks being less or more time critical,

d) the device application logging a received signal strength indicator (RSSI) of a wireless communication channel relating to the set of wireless transfer related tasks,

e) the device application defining a wireless transfer scheme based on step a-d, and setting a lower limit of the RSSI, said lower limit of the RSSI restraining data in the wireless transfer scheme associated with one or more groups of wireless transfer related tasks being less time critical from being transferred when the RSSI is below said lower limit, such that the communication channel is primarily loaded with the wireless transfer related task being more time critical during periods of low RSSI values whereas the communication channel in periods of high RSSI values may be loaded with the wireless transfer related task being less time critical.

In an embodiment the step of defining a wireless application transfer scheme comprises a step of setting a set of limits of RSSI's, said set of limits of the RSSI's defining in which intervals of RSSI values said prioritized subgroups of tasks being less or more time critical may be allowed to transfer data wirelessly.

In an embodiment the step of logging the RSSI of the wireless communication channel relating to the set of wireless transfer related tasks furthermore comprises logging a bandwidth quality of the wireless communication channel.

In an embodiment the device application is furthermore defining the wireless transfer scheme based on a step of the device application logging the battery level of the device.

In an embodiment the device application is furthermore defining the wireless transfer scheme based on a step of the device application logging the charging state level of the device.

In an embodiment the device application is furthermore defining the wireless transfer scheme based on a step of the device application monitoring a group of parameters that influences the battery consumption of said device.

In an embodiment the step of activating a set of wireless transfer related tasks comprises one or more tasks selected from the group of sending or receiving emails, RSS feeds, news updates, weather forecasts, document synchronization, antivirus updates, device application updates, SMS, viral updates, bank transfer details, virtual wallet purchase updates or other types of data transfer related tasks.

The object above is also achieved by providing a battery operated mobile wireless information device for minimizing power consumption during operation, said device having a plurality of device applications running thereon, said plurality of device applications regularly needing to communicate via the internet using wireless communication channels, said device capable of automatically modifying a wireless transfer related behavior of the mobile wireless communication device, said device comprising:

an antenna and an RF front end capable of detecting the RSSI value of the wireless communication channel;

a processor being configured to control operation of said device including being configured to receive or transmit information via the antenna and the RF front end, and to run a device application on said device;

said processor further being configured to activate a set of wireless transfer related tasks on the mobile wireless information device;

said processor further being configured to run a device application on said wireless information device capable of logging:

- an activation period of each wireless transfer related task of said set of wireless transfer related tasks,
- an amount of data transferred related to each wireless transfer related task of said set of wireless transfer related tasks, and
- an associated device application related to each wireless transfer related task of said set of wireless transfer related tasks;

said processor further being configured to run a device application on said wireless information device capable of grouping the set of wireless transfer related tasks into prioritized subgroups of tasks being less or more time critical;
said processor further being configured to run a device application on said wireless information device capable of logging a received signal strength indicator (RSSI) of a wireless communication channel relating to the set of wireless transfer related tasks,
said processor further being configured to run a device application on said wireless information device capable of defining a wireless transfer scheme and capable of setting a lower limit of the RSSI, said lower limit of the RSSI restraining data in the wireless transfer scheme associated with one or more groups of wireless transfer related tasks being less time critical from being transferred when the RSSI is below said lower limit, such that the communication channel is primarily loaded with the wireless transfer related task being more time critical during periods of low RSSI values whereas the communication channel in periods of high RSSI values may be loaded with the wireless transfer related task being less time critical.

In an embodiment the device application of the device is furthermore capable of defining a wireless application.

In an embodiment the device application of the device is furthermore capable of defining a wireless application transfer scheme furthermore is capable of setting a set of limits of RSSI's, said set of limits of the RSSI's defining in which intervals of RSSI values said prioritized subgroups of tasks being less or more time critical may be allowed to transfer data wirelessly.

In an embodiment the device application of the device is furthermore capable of logging the RSSI of the wireless communication channel relating to the set of wireless transfer related tasks furthermore is capable of logging a bandwidth quality of the wireless communication channel.

In an embodiment the device application of the device is furthermore capable of defining the wireless transfer scheme furthermore based on the device application logging the battery level of the device.

In an embodiment the device application of the device is furthermore capable of defining the wireless transfer scheme furthermore based on the device application logging the charging state level of the device.

In an embodiment the device application of the device is furthermore capable of defining the wireless transfer scheme based on a step of the device application monitoring a group of parameters that influences the battery consumption of said device such as one of such parameters being a brightness of a screen of the device.

In an embodiment the processor is further configured to run a device application on said wireless information device capable of activating a set of wireless transfer related tasks, said set of wireless transfer related tasks comprising one or more tasks selected from the group of sending or receiving emails, RSS feeds, news updates, weather forecasts, document synchronization, antivirus updates, device application updates, SMS, viral updates, bank transfer details, virtual wallet purchase updates or other types of data transfer related tasks.

Further objects, features, advantages and properties of the engine and method of operating an engine according to the present disclosure will become apparent from the detailed description.

BRIEF DESCRIPTION OF THE DRAWINGS

In the following detailed portion of the present description, the invention will be explained in more detail with reference to the exemplary embodiments shown in the drawings, in which:

Fig. 1 is a flow diagram of an embodiment of the method according to the invention,

Fig. 2 is a schematic flow diagram of an embodiment of the method according to the invention,

Fig. 3a is graphical representation of the received signal strength in a mobile device as function of time,

Fig. 3b is graphical representation of the received signal strength in a mobile device as function of time,

Fig. 4 is graphical representation of the received signal strength in a mobile device as function of time,

Fig. 5 is a block diagram of a mobile device, and

Fig. 6 is a diagrammatic representation of a mobile device network.

DETAILED DESCRIPTION OF PREFERRED EMBODIMENTS

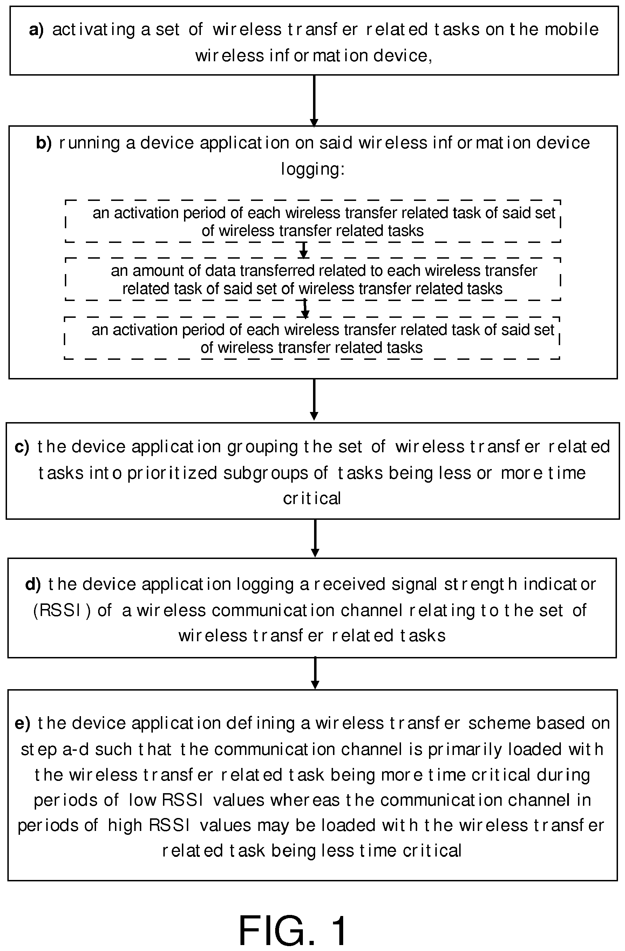

Data transfer related tasks on mobile wireless information devices become increasingly important on modern day mobile devices and the data related transfers to and from such mobile devices may be significantly improved by the present invention. Fig. 1 shows a flow diagram of an embodiment of the method according to the invention demonstrating a consecutive number of steps. The first step of the method referred to as step a) in Fig. 1 is the activation of a set of wireless transfer related tasks on the mobile wireless information device. Since the invention relates to wireless data transfer an essential step of the method is activation wireless transfer related tasks. The next step is referred to as step b) in Fig. 1 and is carried out when wireless transfer related tasks are active on the wireless information mobile device. The device application is logging an activation period of each wireless transfer related task of said set of wireless transfer related tasks e.g. a period of time wherein the wireless transfer related task is active and transferring data such as the time to do an email synchronization. Also the amount of data transferred related to each wireless transfer related task of said set of wireless transfer related tasks is logged to have the behavioral history of each tasks to be able to make a just prediction of a future amount of data related to each wireless transfer related task. Finally, an associated device application related to each wireless transfer related task of said set of wireless transfer related tasks is logged in order to be able subsequently to prioritize the wireless transfer related tasks depending on their associated device application e.g. all tasks relating to e-mail synchronization may automatically be given low priority independent of both activation period and amount of data transferred only based on the associated device application. Next step c) concerns grouping the set of wireless transfer related tasks into prioritized subgroups of tasks being less or more time critical. As stated above tasks e.g. relating to e-mail synchronization may automatically be given a low priority since they mails may be synchronized during periods of high quality data transfer capability. However, different modes of operation may be superimposed to such prioritizations e.g. gaming mode, work mode, night mode, roaming mode etc.. During a specific mode the prioritizing may be done differently e.g. in work mode e-mail synchronization may be given higher prioritization. Prioritizing the wireless transfer related tasks into subgroups is however an important step in all modes. The next step d) in Fig. 1 is the device application logging a received signal strength indicator (RSSI) of a wireless communication channel relating to the set of wireless transfer related tasks. The RSSI is a generic radio receiver technology metric, which is usually invisible to the user of the device containing the receiver, but is directly known to users of wireless networking. Logging the RSSI is often done in the intermediate frequency (IF) stage before the IF amplifier. In zero-IF systems, it is done in the baseband signal chain, before the baseband amplifier. RSSI output is often a DC analog level. It can also be sampled by an internal ADC and the resulting codes available directly or via a peripheral or an internal processor bus in the wireless information mobile device.

Finally, the last step e) of the method shown in Fig. 1 is the device application defining a wireless transfer scheme based on step a-d such that the communication channel is primarily loaded with the wireless transfer related task being more time critical during periods of low RSSI values whereas the communication channel in periods of high RSSI values may be loaded with the wireless transfer related task being less time critical. By defining a wireless transfer scheme based on the RSSI values and the above mentioned parameters, the energy consumption or power consumption associated with wireless data transfer may be significantly reduced. By transferring data only during periods where high RSSI values are measured and predicted a large amount of data may be transferred using less power than in conventional wireless information mobile devices, since only periods of "high quality" data transfer capability is utilized, whereas data transfer during "low quality" data transfer capability is avoided. The reason to use terms like high and low quality data transfer capability instead of using actual RSSI values is that "high quality" data transfer capabilities in periods of low RSSI values may be lower than "low quality" data transfer capabilities in periods of high RSSI values. The determination of high and low quality is therefore typically based rather on a moving average value than a fixed value. Also worth noticing is that very time critical wireless transfer related tasks will typically be executed even during periods of "low quality" data transfer capabilities e.g. critical updates, user enforced behavior to ensure user experience etc.. However, all the less time critical tasks may be performed in optimum periods to save power and maximize the gain from such periods.

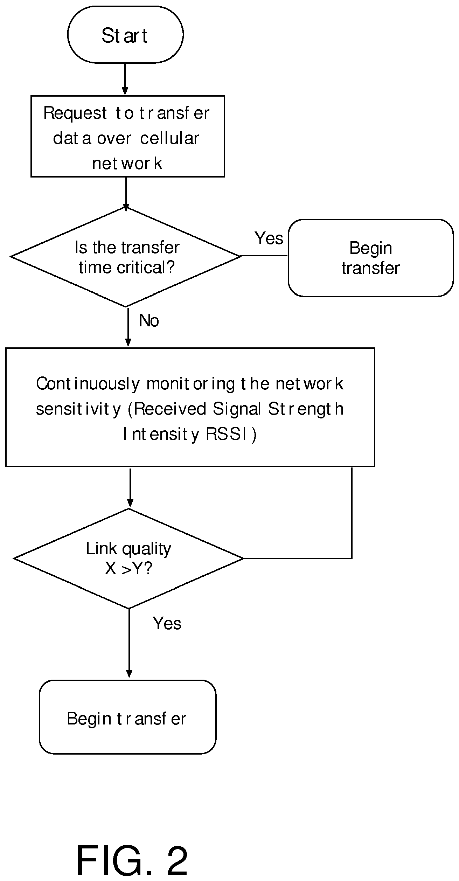

Fig. 2 shows a more schematic flow diagram of an embodiment of the method according to the invention. All time critical transfers are transferred after identifying that they are time-critical. All less time critical transfers are transferred when the link quality is above a certain limit X. The link quality is continuously monitored by monitoring the network sensitivity also known as the RSSI value. The limit may as explained above be a fixed value which is easy, but not very intelligent or calculated as function of time e.g. a moving average of the RSSI values. A moving average, also called rolling average, rolling mean or running average, is a type of finite impulse response filter used to analyze a set of data points by creating a series of averages of different subsets of the full data set. Given a series of numbers and a fixed subset size, the first element of the moving average is obtained by taking the average of the initial fixed subset of the number series. Then the subset is modified by "shifting forward", that is excluding the first number of the series and including the next number following the original subset in the series. This creates a new subset of numbers, which is averaged. This process is repeated over the entire data series. The plot line connecting all the (fixed) averages is the moving average. A moving average is a set of numbers, each of which is the average of the corresponding subset of a larger set of datum points. A moving average may also use unequal weights for each datum value in the subset to emphasize particular values in the subset. A moving average is commonly used with time series data to smooth out short-term fluctuations and highlight longer-term trends or cycles, also referred to as low-pass filtering. To carry out the method according to the invention the moving average may advantageously be calculated as a weighted average being any average that has multiplying factors to give different weights to data at different positions in the sample window e.g. a linearly weighted moving average.

$$Y_n = AVG(f(n) * X_n, f(n-1) * X_{n-1}, f(n-2) * X_{n-2}, \ldots f(n-o) * X_{n-o})$$

Where n is the current sample number and o is the total number of previous samples included in the algorithm. $Y_n$ was used as the limit for each sample. $X_n$ is the current sampled RSSI value. The function f(n) is the weighing factor for sample n and may be any appropriate function. In the implementation f(n) may be a look up table or a mathematical function or even a constant value.

The algorithm may also be implemented in two or more steps including conditional statements to react differently to a positive or negative derivative. A step may use the largest or smallest value between a moving average and the instantaneous value; another step may then perform another moving average of the result. An example of the calculation of a moving average may be done using the following expressions:

$$Z_n = MAX(X_n, AVG(X_n, X_{n-1}, X_{n-2}, \ldots, X_{n-m})$$

and

$$Y_n = AVG(Z_n, Z_{n-1}, Z_{n-2}, \ldots Z_{n-o})$$

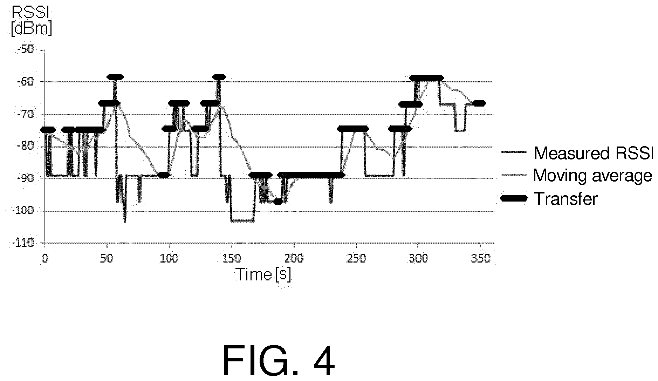

Where n is the current sample number and m and o are the total number of previous samples included in the algorithm. $Y_n$ was used as the limit for each sample. $Z_n$ is an intermediate variable in the transfer function. In Fig. 4 the following values of the previously stated expressions for the moving average: m = 19, o = 10 and the MAX function was used to obtain the value for each sample (n). $X_n$ is the current sampled RSSI value.

The moving average is a way to include the past to be able to make a prediction about the future behavior of the system.

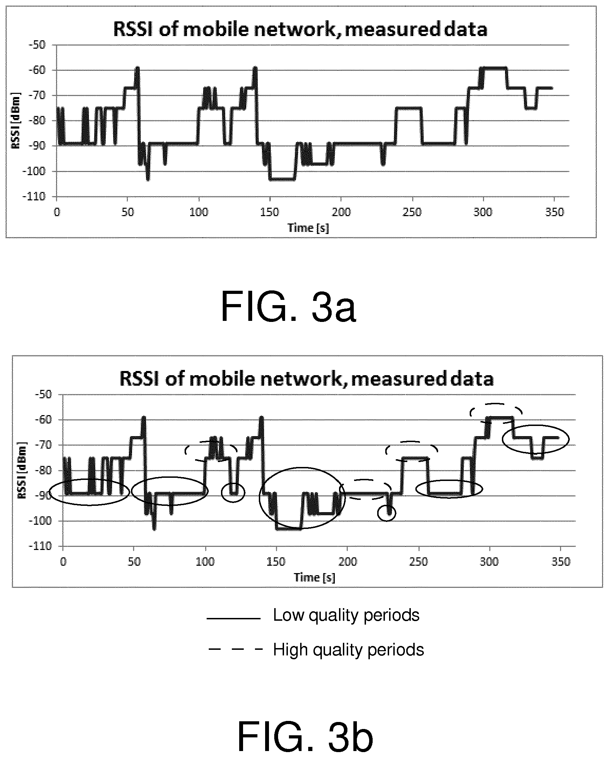

Fig. 3a is a graphical representation of a real data set of RSSI values obtained by measuring RSSI values on a mobile wireless information device. Here the mobile wireless information device was a cell phone using an Android® platform. The cell phone was measuring RSSI values while moving around in the center of Stockholm logging the RSSI values once per second and in a resolution of 2dBm. The dataset seen in Fig. 3a shows the returned RSSI converted to dBm which spans from -113 dBm to -51 dBm during these measurements. The RSSI values returned by a receiver needs to be translated according to a definition in the wireless standard used or as defined by the receiver to obtain the value in dBm. However, it is not necessary for the implementation of this invention, but only to get a defined unit of the signal strength e.g. when comparing different wireless standards or systems. By glance it is evident that both periods of high and low data transfer capability has occurred during these measurements based on the information given by the receiver signal strength. Such periods are indicated by circles in Fig. 3b where circles having a full line indicate low quality periods and dashed lines indicate high quality periods.

Based on such a data set a moving average may be calculated. In Fig. 4 the same data set as presented in Figs. 3a and 3b is shown together with a calculated two-step moving average calculation based on the RSSI values (Fig. 4 Grey line). Based on the calculated moving average a plurality of periods of high quality data transfer capability (Fig. 4 Bold line) may be determined. As seen some transfer periods are short and some are long, but all periods are high compared to the average of the period preceding the transfer period and may therefore act as a local maximum in terms of RSSI values. Therefore, if these periods are exploited to the full, power may be saved by minimizing data transfer in the remaining intervals.

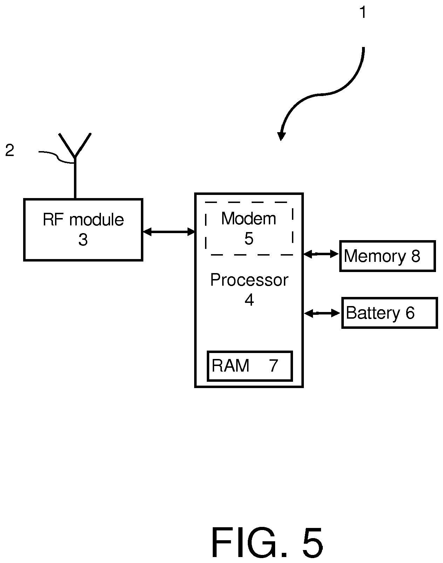

Fig. 5 illustrates in block diagram form a simplified general architecture of the mobile wireless information device 1 constructed in accordance with the present invention. The processor module 4 controls the operation of an RF module 3. Furthermore, the RF unit is connected to or integrated with an antenna 2. The processor 4 controls the communication with the cellular network via the RF module 3 also referred to as a RF Front end. A modem 5 is either an integrated part of the processor module 4 or a separate unit. The modem may be of GSM, UMTS, HSPA (HSDPA, HSUPA, HSPA+), CDMA2000, TD-SCDMA, LTE type or another appropriate modem type. The processor module 4 also forms the interface for some of the peripheral units of the device, including a (Flash) ROM memory 8 and a battery 6. In Fig. 5 the processor module has an integrated RAM 7.

In a radio receiver circuit, the RF front end is a generic term for all the circuitry between the antenna and the first intermediate frequency (IF) stage. It consists of all the components in the receiver that process the signal at the original incoming radio frequency (RF), before it is converted to a lower intermediate frequency (IF). In microwave and satellite receivers it is often called the low-noise block (LNB) or low-noise down converter (LND), so that the signal from the antenna can be transferred to the rest of the receiver at the more easily handled intermediate frequency.

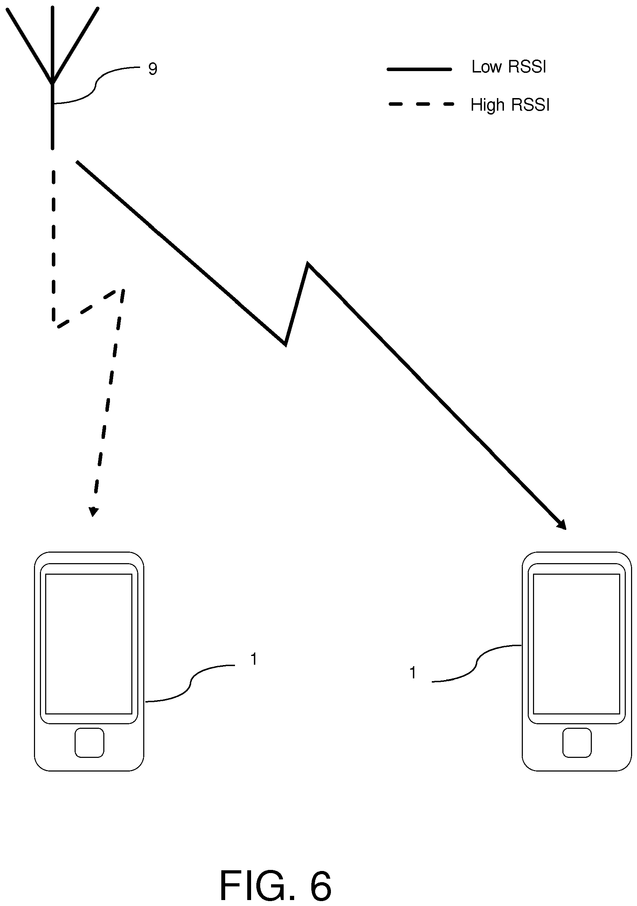

Fig. 6 shows a mobile wireless information device in a network configuration on two various positions with respect to a network antenna 9. When the mobile wireless information device 1 is close to the network antenna 9 the RSSI values are typically high indicated by the dashed line whereas when the mobile wireless information device 1 is further away from the network antenna the RSSI values are typically low indicated by the full line.

The battery of the battery operated mobile wireless information device may be any type of battery rechargeable or non-rechargeable.

The term "comprising" as used in the claims does not exclude other elements or steps. The term "a" or "an" as used in the claims does not exclude a plurality. The single processor, device or other unit may fulfill the functions of several means recited in the claims.

The reference signs used in the claims shall not be construed as limiting the scope.

Although the present invention has been described in detail for purpose of illustration, it is understood that such detail is solely for that purpose, and variations can be made therein by those skilled in the art without departing from the scope of the invention.

**Claims**

1.  A method of minimizing power consumption during operation of a battery operated mobile wireless information device having a plurality of device applications running thereon, said plurality of device applications regularly needing to communicate via the internet using wireless communication channels, said method automatically modifying a wireless transfer related behavior of the mobile wireless communication device, comprising the steps of:

    a) activating a set of wireless transfer related tasks on the mobile wireless information device,
    b) running a device application on said wireless information device logging:

    - an activation period of each wireless transfer related task of said set of wireless transfer related tasks,
    - an amount of data transferred related to each wireless transfer related task of said set of wireless transfer related tasks, and
    - an associated device application related to each wireless transfer related task of said set of wireless transfer related tasks,

    c) the device application grouping the set of wireless transfer related tasks into prioritized subgroups of tasks being less or more time critical,
    d) the device application logging a received signal strength indicator, RSSI, of a wireless communication channel relating to the set of wireless transfer related tasks,
    e) the device application defining a wireless transfer scheme based on step a-d, and setting a lower limit of the RSSI, said lower limit of the RSSI restraining data in the wireless transfer scheme associated with one or more groups of wireless transfer related tasks being less time critical from being transferred when the RSSI is below said lower limit, such that the communication channel is primarily loaded with the wireless transfer related task being more time critical during periods of low RSSI values whereas the communication channel in periods of high RSSI values may be loaded with the wireless transfer related task being less time critical.

2.  A method according to claims 1, wherein the step of defining a wireless application transfer scheme comprises a step of setting a set of limits of RSSI's, said set of limits of the RSSI's defining in which intervals of RSSI values said prioritized subgroups of tasks being less or more time critical may be allowed to transfer data wirelessly.

3.  A method according to claim 1 or 2, wherein the step of logging the RSSI of the wireless communication channel relating to the set of wireless transfer related tasks furthermore comprises logging a bandwidth quality of the wireless communication channel.

4.  A method according to any of claims 1-3, the device application furthermore defining the wireless transfer scheme based on a step of the device application logging the battery level of the device.

**5.** A method according to any of claims 1-4, the device application furthermore defining the wireless transfer scheme based on a step of the device application logging the charging state level of the device.

**6.** A method according to any of claims 1-5, the device application furthermore defining the wireless transfer scheme based on a step of the device application monitoring a group of parameters that influences the battery consumption of said device.

**7.** A method according to any of claims 1-6, wherein the step of activating a set of wireless transfer related tasks comprises one or more tasks selected from the group of sending or receiving emails, RSS feeds, news updates, weather forecasts, document synchronization, antivirus updates, device application updates, SMS, viral updates, bank transfer details, virtual wallet purchase updates or other types of data transfer related tasks.

**8.** A battery operated mobile wireless information device for minimizing power consumption during operation, said device having a plurality of device applications running thereon, said plurality of device applications regularly needing to communicate via the internet using wireless communication channels, said device capable of automatically modifying a wireless transfer related behavior of the mobile wireless communication device, said device comprising:

an antenna (2) and an RF front end capable of detecting the RSSI value of the wireless communication channel;
a processor (4) being configured to control operation of said device including being configured to receive or transmit information via the antenna and the RF front end, and to run a device application on said device;
said processor (4) further being configured to activate a set of wireless transfer related tasks on the mobile wireless information device;
said processor (4) further being configured to run a device application on said wireless information device capable of logging:

- an activation period of each wireless transfer related task of said set of wireless transfer related tasks,
- an amount of data transferred related to each wireless transfer related task of said set of wireless transfer related tasks, and
- an associated device application related to each wireless transfer related task of said set of wireless transfer related tasks;

said processor (4) further being configured to run a device application on said wireless information device capable of grouping the set of wireless transfer related tasks into prioritized subgroups of tasks being less or more time critical;
said processor (4) further being configured to run a device application on said wireless information device capable of logging a received signal strength indicator (RSSI) of a wireless communication channel relating to the set of wireless transfer related tasks,
said processor (4) further being configured to run a device application on said wireless information device capable of defining a wireless transfer scheme and capable of setting a lower limit of the RSSI, said lower limit of the RSSI restraining data in the wireless transfer scheme associated with one or more groups of wireless transfer related tasks being less time critical from being transferred when the RSSI is below said lower limit, such that the communication channel is primarily loaded with the wireless transfer related task being more time critical during periods of low RSSI values whereas the communication channel in periods of high RSSI values may be loaded with the wireless transfer related task being less time critical.

**9.** A battery operated mobile wireless information device according to claim 8, wherein said device application capable of defining a wireless application transfer scheme furthermore is capable of setting a set of limits of RSSI's, said set of limits of the RSSI's defining in which intervals of RSSI values said prioritized subgroups of tasks being less or more time critical may be allowed to transfer data wirelessly.

**10.** A battery operated mobile wireless information device according to claim 8 or 9, wherein said device application capable of logging the RSSI of the wireless communication channel relating to the set of wireless transfer related tasks furthermore is capable of logging a bandwidth quality of the wireless communication channel.

**11.** A battery operated mobile wireless information device according to any of claims 8-10, wherein said device application is capable of defining the wireless transfer scheme furthermore based on the device application logging the battery level of the device.

**12.** A battery operated mobile wireless information device according to any of claims 8-11, wherein said device application is capable of defining the wireless transfer scheme furthermore based on the device application logging the charging state level of the device.

**13.** A battery operated mobile wireless information device according to any of claims 8-12, wherein said device application capable of defining the wireless transfer scheme based on a step of the device application monitoring a group of parameters that influences the battery consumption of said device such as one of such parameters being a brightness of a screen of the device.

**14.** A battery operated mobile wireless information device according to any of claims 8-13, said processor (4) further being configured to run a device application on said wireless information device capable of activating a set of wireless transfer related tasks, said set of wireless transfer related tasks comprising one or more tasks selected from the group of sending or receiving emails, RSS feeds, news updates, weather forecasts, document synchronization, antivirus updates, device application updates, SMS, viral updates, bank transfer details, virtual wallet purchase updates or other types of data transfer related tasks.

**Patentansprüche**

**1.** Verfahren zum Minimieren des Stromverbrauchs während des Betriebs einer batteriebetriebenen mobilen drahtlosen Informationsvorrichtung mit einer Mehrzahl von Vorrichtungsanwendungen, die darauf ausgeführt werden, wobei die Mehrzahl von Vorrichtungsanwendungen regelmäßig über das Internet unter Verwendung von drahtlosen Kommunikationskanälen kommunizieren müssen, wobei das Verfahren ein drahtloses übertragungsbezogenes Verhalten der mobilen drahtlosen Kommunikationsvorrichtung automatisch modifiziert, umfassend die Schritte:

a) Aktivieren eines Satzes von drahtlosen übertragungsbezogenen Aufgaben auf der mobilen drahtlosen Informationsvorrichtung,
b) Ausführen einer Vorrichtungsanwendung auf der drahtlosen Informationsvorrichtung, die Folgendes protokolliert:

- eine Aktivierungsperiode jeder drahtlosen übertragungsbezogenen Aufgabe des Satzes von drahtlosen übertragungsbezogenen Aufgaben,
- eine Menge von übertragenen Daten in Beziehung mit jeder drahtlosen übertragungsbezogenen Aufgabe des Satzes von drahtlosen übertragungsbezogenen Aufgaben, und
- eine assoziierte Vorrichtungsanwendung in Beziehung mit jeder drahtlosen übertragungsbezogenen Aufgabe des Satzes von drahtlosen übertragungsbezogenen Aufgaben,

c) Gruppieren mittels der Vorrichtungsanwendung des Satzes von drahtlosen übertragungsbezogenen Aufgaben in priorisierte Untergruppen von Aufgaben, die weniger oder mehr zeitkritisch sind,
d) Protokollieren mittels der Vorrichtungsanwendung eines Empfangssignalstärkeindikators, RSSI (Received Signal Strength Indicator), eines drahtlosen Kommunikationskanals in Beziehung mit dem Satz von drahtlosen übertragungsbezogenen Aufgaben,
e) Definieren mittels der Vorrichtungsanwendung eines drahtlosen Übertragungsschemas basierend auf Schritt a-d und Festlegen einer unteren Grenze des RSSI, wobei die untere Grenze des RSSI Daten im drahtlosen Übertragungsschema einschränkt, die mit einer oder mehreren Gruppen von drahtlosen übertragungsbezogenen Aufgaben assoziiert sind, die weniger zeitkritisch in Bezug auf die Übertragung sind, wenn der RSSI unterhalb der unteren Grenze liegt, so dass der Kommunikationskanal primär mit der drahtlosen übertragungsbezogenen Aufgabe geladen wird, die in Perioden niedriger RSSI-Werte zeitkritischer ist, während der Kommunikationskanal in Perioden hoher RSSI-Werte mit der drahtlosen übertragungsbezogenen Aufgabe, die weniger zeitkritisch ist, geladen werden kann.

**2.** Verfahren nach Anspruch 1, wobei der Schritt des Definierens eines drahtlosen Anwendungsübertragungsschemas einen Schritt des Festlegens eines Satzes von Grenzen von RSSIs umfasst, wobei der Satz von Grenzen der RSSIs definiert, in welchen Intervallen von RSSI-Werten den priorisierten Untergruppen von Aufgaben, die weniger oder mehr zeitkritisch sind, erlaubt wird, Daten drahtlos zu übertragen.

**3.** Verfahren nach Anspruch 1 oder 2, wobei der Schritt des Protokollierens des RSSI des drahtlosen Kommunikationskanals in Beziehung mit dem Satz von drahtlosen übertragungsbezogenen Aufgaben ferner das Protokollieren einer Bandbreitenqualität des drahtlosen Kommunikationskanals umfasst.

4. Verfahren nach einem der Ansprüche 1-3, wobei die Vorrichtungsanwendung ferner das drahtlose Übertragungsschema basierend auf einem Schritt der Vorrichtungsanwendung definiert, der den Batteriestand der Vorrichtung protokolliert.

5. Verfahren nach einem der Ansprüche 1-4, wobei die Vorrichtungsanwendung ferner das drahtlose Übertragungsschema basierend auf einem Schritt der Vorrichtungsanwendung definiert, der den Ladezustandspegel der Vorrichtung protokolliert.

6. Verfahren nach einem der Ansprüche 1-5, wobei die Vorrichtungsanwendung ferner das drahtlose Übertragungsschema basierend auf einem Schritt der Vorrichtungsanwendung definiert, der eine Gruppe von Parametern überwacht, die den Batterieverbrauch der Vorrichtung beeinflussen.

7. Verfahren nach einem der Ansprüche 1-6, wobei der Schritt des Aktivierens eines Satzes von drahtlosen übertragungsbezogenen Aufgaben eine oder mehrere Aufgaben umfasst, die aus der Gruppe des Sendens oder Empfangens von E-Mails, RSS-Feeds, News-Updates, Wettervorhersagen, Dokumentensynchronisation, Antiviren-Updates, Vorrichtungsanwendungs-Updates, SMS, Viral-Updates, Banküberweisungsdetails, Kauf-Updates für virtuelle Brieftaschen oder anderen Arten von datenübertragungsbezogenen Aufgaben ausgewählt sind.

8. Batteriebetriebene mobile drahtlose Informationsvorrichtung zum Minimieren des Stromverbrauchs während des Betriebs, wobei die Vorrichtung eine Mehrzahl von Vorrichtungsanwendungen aufweist, die darauf ausgeführt werden, wobei die Mehrzahl von Vorrichtungsanwendungen regelmäßig über das Internet unter Verwendung von drahtlosen Kommunikationskanälen kommunizieren müssen, wobei die Vorrichtung in der Lage ist, ein drahtloses übertragungsbezogenes Verhalten der mobilen drahtlosen Kommunikationsvorrichtung automatisch zu modifizieren, wobei die Vorrichtung umfasst:

eine Antenne (2) und ein HF-Frontend, die in der Lage sind, den RSSI-Wert des drahtlosen Kommunikationskanals zu erkennen;
einen Prozessor (4), der ausgelegt ist, um den Betrieb der Vorrichtung zu steuern, einschließlich ausgelegt ist, um Informationen über die Antenne und das HF-Frontend zu empfangen oder zu übertragen und um eine Vorrichtungsanwendung auf der Vorrichtung auszuführen;
wobei der Prozessor (4) ferner ausgelegt ist, um einen Satz von drahtlosen übertragungsbezogenen Aufgaben auf der mobilen drahtlosen Informationsvorrichtung zu aktivieren;
wobei der Prozessor (4) ferner ausgelegt ist, um eine Vorrichtungsanwendung auf der drahtlosen Informationsvorrichtung auszuführen, die in der Lage ist, Folgendes zu protokollieren:

- eine Aktivierungsperiode jeder drahtlosen übertragungsbezogenen Aufgabe des Satzes von drahtlosen übertragungsbezogenen Aufgaben,
- eine Menge von übertragenen Daten in Beziehung mit jeder drahtlosen übertragungsbezogenen Aufgabe des Satzes von drahtlosen übertragungsbezogenen Aufgaben, und
- eine assoziierte Vorrichtungsanwendung in Beziehung mit jeder drahtlosen übertragungsbezogenen Aufgabe des Satzes von drahtlosen

übertragungsbezogenen Aufgaben;
wobei der Prozessor (4) ferner ausgelegt ist, um eine Vorrichtungsanwendung auf der drahtlosen Informationsvorrichtung auszuführen, die in der Lage ist, den Satz von drahtlosen übertragungsbezogenen Aufgaben in priorisierte Untergruppen von Aufgaben zu gruppieren, die weniger oder mehr zeitkritisch sind;
wobei der Prozessor (4) ferner ausgelegt ist, um eine Vorrichtungsanwendung auf der drahtlosen Informationsvorrichtung auszuführen, die in der Lage ist, einen Empfangssignalstärkeindikator (Received Signal Strength Indicator, RSSI) eines drahtlosen Kommunikationskanals in Beziehung mit dem Satz von drahtlosen übertragungsbezogenen Aufgaben zu protokollieren,
wobei der Prozessor (4) ferner ausgelegt ist, um eine Vorrichtungsanwendung auf der drahtlosen Informationsvorrichtung auszuführen, die in der Lage ist, ein drahtloses Übertragungsschema zu definieren, und in der Lage ist, eine untere Grenze des RSSI festzulegen, wobei die untere Grenze des RSSI Daten im drahtlosen Übertragungsschema einschränkt, die mit einer oder mehreren Gruppen von drahtlosen übertragungsbezogenen Aufgaben assoziiert sind, die weniger zeitkritisch in Bezug auf die Übertragung sind, wenn der RSSI unterhalb der unteren Grenze liegt, so dass der Kommunikationskanal primär mit der drahtlosen übertragungsbezogenen Aufgabe geladen wird, die in Perioden niedriger RSSI-Werte zeitkritischer ist, während der Kommunikationskanal in Perioden hoher RSSI-Werte mit der drahtlosen übertragungsbezogenen Aufgabe, die weniger zeitkritisch ist, geladen werden kann.

9. Batteriebetriebene mobile drahtlose Informationsvorrichtung nach Anspruch 8, wobei die Vorrichtungsanwendung, die in der Lage ist, ein drahtloses Anwendungsübertragungsschema zu definieren, ferner in der Lage ist, einen Satz von Grenzen von RSSIs festzulegen, wobei der Satz von Grenzen der RSSIs definiert, in welchen Intervallen von RSSI-Werten den priorisierten Untergruppen von Aufgaben, die weniger oder mehr zeitkritisch sind, erlaubt wird, Daten drahtlos zu übertragen.

10. Batteriebetriebene mobile drahtlose Informationsvorrichtung nach Anspruch 8 oder 9, wobei die Vorrichtungsanwendung, die in der Lage ist, den RSSI des drahtlosen Kommunikationskanals in Beziehung mit dem Satz von drahtlosen übertragungsbezogenen Aufgaben zu protokollieren, ferner in der Lage ist, eine Bandbreitenqualität des drahtlosen Kommunikationskanals zu protokollieren.

11. Batteriebetriebene mobile drahtlose Informationsvorrichtung nach einem der Ansprüche 8-10, wobei die Vorrichtungsanwendung in der Lage ist, das drahtlose Übertragungsschema basierend auf der Vorrichtungsanwendung, die den Batteriestand der Vorrichtung protokolliert, weiter zu definieren.

12. Batteriebetriebene mobile drahtlose Informationsvorrichtung nach einem der Ansprüche 8-11, wobei die Vorrichtungsanwendung in der Lage ist, das drahtlose Übertragungsschema basierend auf der Vorrichtungsanwendung, die den Ladezustandspegel der Vorrichtung protokolliert, weiter zu definieren.

13. Batteriebetriebene mobile drahtlose Informationsvorrichtung nach einem der Ansprüche 8-12, wobei die Vorrichtungsanwendung in der Lage ist, das drahtlose Übertragungsschema basierend auf einem Schritt der Vorrichtungsanwendung zu definieren, der eine Gruppe von Parametern überwacht, die den Batterieverbrauch der Vorrichtung beeinflussen, wie beispielsweise, dass einer dieser Parameter eine Helligkeit eines Bildschirms der Vorrichtung ist.

14. Batteriebetriebene mobile drahtlose Informationsvorrichtung nach einem der Ansprüche 8-13, wobei der Prozessor (4) ferner ausgelegt ist, um eine Vorrichtungsanwendung auf der drahtlosen Informationsvorrichtung auszuführen, die in der Lage ist, einen Satz von drahtlosen übertragungsbezogenen Aufgaben zu aktivieren, wobei der Satz von drahtlosen übertragungsbezogenen Aufgaben eine oder mehrere Aufgaben umfasst, die aus der Gruppe des Sendens oder Empfangens von E-Mails, RSS-Feeds, News-Updates, Wettervorhersagen, Dokumentensynchronisation, Antiviren-Updates, Vorrichtungsanwendungs-Updates, SMS, Viral-Updates, Banküberweisungsdetails, Kauf-Updates für virtuelle Brieftaschen oder anderen Arten von datenübertragungsbezogenen Aufgaben ausgewählt sind.

## Revendications

1. Procédé de réduction de la consommation d'énergie, exécuté pendant le fonctionnement d'un dispositif d'information mobile sans fil alimenté par batterie sur lequel une pluralité d'applications de dispositif s'exécute, ladite pluralité d'applications de dispositif devant communiquer régulièrement via l'Internet au moyen de canaux de communication sans fil, ledit procédé modifiant automatiquement un comportement du dispositif de communication mobile sans fil relatif au transfert sans fil, comprenant les étapes suivantes :

   a) activer un ensemble de tâches liées au transfert sans fil sur le dispositif d'information mobile sans fil,
   b) exécuter une application de dispositif sur ledit dispositif d'information sans fil, qui consigne :

      - une période d'activation de chaque tâche liée au transfert sans fil dudit ensemble de tâches liées au transfert sans fil,
      - une quantité de données transférées liée à chaque tâche liée au transfert sans fil dudit ensemble de tâches liées au transfert sans fil, et
      - une application de dispositif associée liée à chaque tâche liée au transfert sans fil dudit ensemble de tâches liées au transfert sans fil,

   c) le dispositif d'application groupe l'ensemble de tâches liées au transfert sans fil en sous-groupes priorisés de tâches de durée moins critique ou de durée plus critique,
   d) le dispositif d'application consigne un indicateur d'intensité de signal reçu, RSSI, d'un canal de communication

EP 2 774 424 B1

sans fil relatif à l'ensemble de tâches liées au transfert sans fil,

e) le dispositif d'application définit un schéma de transfert sans fil basé sur les étapes a à d, et fixe une limite inférieure du RSSI, ladite limite inférieure du RSSI servant à empêcher les données du schéma de transfert sans fil associé à un ou plusieurs groupes de tâches liées au transfert sans fil qui sont de durée moins critique d'être transférées lorsque le RSSI est inférieur à ladite limite inférieure, de telle façon que le canal de communication soit chargé principalement avec la tâche liée au transfert sans fil qui est de durée plus critique durant les périodes de faibles valeurs de RSSI, tandis que le canal de communication, dans les périodes de fortes valeurs de RSSI, peut être chargé avec la tâche liée au transfert sans fil qui est de durée moins critique.

2. Procédé selon la revendication 1, dans lequel l'étape consistant à définir un schéma de transfert d'application sans fil comprend une étape consistant à fixer un ensemble de limites des RSSI, ledit ensemble de limites des RSSI servant à définir dans quels intervalles de valeurs de RSSI lesdits sous-groupes priorisés de tâches de durée moins critique ou de durée plus critique peuvent être autorisés à transférer des données en mode sans fil.

3. Procédé selon la revendication 1 ou 2, dans lequel l'étape consistant à consigner le RSSI du canal de communication sans fil relatif à l'ensemble de tâches liées au transfert sans fil comprend également la consignation d'une qualité de largeur de bande du canal de communication sans fil.

4. Procédé selon l'une quelconque des revendications 1 à 3, dans lequel l'application de dispositif définit également le schéma de transfert sans fil d'après une étape de l'application de dispositif consistant à consigner le niveau de batterie du dispositif.

5. Procédé selon l'une quelconque des revendications 1 à 4, dans lequel l'application de dispositif définit également le schéma de transfert sans fil d'après une étape de l'application de dispositif consistant à consigner le niveau d'état de charge du dispositif.

6. Procédé selon l'une quelconque des revendications 1 à 5, dans lequel l'application de dispositif définit également le schéma de transfert sans fil d'après une étape pour l'application de dispositif consistant à surveiller un groupe de paramètres qui influence la consommation de la batterie dudit dispositif.

7. Procédé selon l'une quelconque des revendications 1 à 6, dans lequel l'étape consistant à activer un ensemble de tâches liées au transfert sans fil comprend une ou plusieurs tâches sélectionnées dans le groupes des tâches consistant à envoyer ou recevoir des courriels, des fils RSS, des mises à jour d'informations, des bulletins météorologiques, des synchronisations de documents, des mises à jour d'antivirus, des mises à jour d'applications de dispositif, des SMS, des mises à jour virales, des relevés de transferts bancaires, des mises à jour d'achats par portefeuilles virtuels ou d'autres types de tâches liées au transfert de données.

8. Dispositif d'information mobile sans fil alimenté par batterie servant à réduire la consommation d'énergie pendant le fonctionnement, une pluralité d'applications de dispositif s'exécutant sur ledit dispositif, ladite pluralité d'applications de dispositif devant communiquer régulièrement via l'Internet au moyen de canaux de communication sans fil, ledit dispositif étant capable de modifier automatiquement un comportement du dispositif de communication mobile sans fil relatif au transfert sans fil, ledit dispositif comprenant :

une antenne (2) et un frontal RF capable de détecter la valeur RSSI du canal de communication sans fil ;
un processeur (4) étant configuré pour commander le fonctionnement dudit dispositif et configuré pour recevoir ou émettre des informations au moyen de l'antenne et du frontal RF, et pour exécuter une application de dispositif sur ledit dispositif;
ledit processeur (4) étant également configuré pour activer un ensemble de tâches liées au transfert sans fil sur le dispositif d'information mobile sans fil,
ledit processeur (4) étant également configuré pour exécuter une application de dispositif sur ledit dispositif d'information sans fil, capable de consigner :

- une période d'activation de chaque tâche liée au transfert sans fil dudit ensemble de tâches liées au transfert sans fil,
- une quantité de données transférées liée à chaque tâche liée au transfert sans fil dudit ensemble de tâches liées au transfert sans fil, et
- une application de dispositif associée liée à chaque tâche liée au transfert sans fil dudit ensemble de tâches liées au transfert sans fil ;

ledit processeur (4) étant également configuré pour exécuter une application de dispositif sur ledit dispositif d'information sans fil, capable de grouper l'ensemble de tâches liées au transfert sans fil en sous-groupes priorisés de tâches de durée moins critique ou de durée plus critique,

ledit processeur (4) étant également configuré pour exécuter une application de dispositif sur ledit dispositif d'information sans fil, capable de consigner un indicateur d'intensité de signal reçu, RSSI, d'un canal de communication sans fil relatif à l'ensemble de tâches liées au transfert sans fil,

ledit processeur (4) étant également configuré pour exécuter une application de dispositif sur ledit dispositif d'information sans fil, capable de définir un schéma de transfert sans fil et capable de fixer une limite inférieure du RSSI, ladite limite inférieure du RSSI servant à empêcher les données du schéma de transfert sans fil associé à un ou plusieurs groupes de tâches liées au transfert sans fil qui sont de durée moins critique d'être transférées lorsque le RSSI est inférieur à ladite limite inférieure, de telle façon que le canal de communication soit chargé principalement avec la tâche liée au transfert sans fil qui est de durée plus critique durant les périodes de faibles valeurs de RSSI, tandis que le canal de communication, dans les périodes de fortes valeurs de RSSI, peut être chargé avec la tâche liée au transfert sans fil qui est de durée moins critique.

9. Dispositif d'information mobile sans fil alimenté par batterie selon la revendication 8, dans lequel ladite application de dispositif capable de définir un schéma de transfert d'application sans fil est également capable de fixer un ensemble de limites des RSSI, ledit ensemble de limites des RSSI servant à définir dans quels intervalles de valeurs de RSSI lesdits sous-groupes priorisés de tâches de durée moins critique ou de durée plus critique peuvent être autorisés à transférer des données en mode sans fil.

10. Dispositif d'information mobile sans fil alimenté par batterie selon la revendication 8 ou 9, dans lequel ladite application de dispositif capable de consigner le RSSI du canal de communication sans fil relatif à l'ensemble de tâches liées au transfert sans fil est également capable de consigner une qualité de largeur de bande du canal de communication sans fil.

11. Dispositif d'information mobile sans fil alimenté par batterie selon l'une quelconque des revendications 8 à 10, dans lequel ladite application de dispositif est capable de définir le schéma de transfert sans fil en outre selon le fait que l'application de dispositif consigne le niveau de batterie du dispositif.

12. Dispositif d'information mobile sans fil alimenté par batterie selon l'une quelconque des revendications 8 à 11, dans lequel ladite application de dispositif est capable de définir le schéma de transfert sans fil en outre selon le fait que l'application de dispositif consigne le niveau d'état de charge du dispositif.

13. Dispositif d'information mobile sans fil alimenté par batterie selon l'une quelconque des revendications 8 à 12, dans lequel ladite application de dispositif est capable de définir le schéma de transfert sans fil selon une étape de l'application de dispositif consistant à surveiller un groupe de paramètres qui influence la consommation de la batterie dudit dispositif, l'un de ces paramètres étant la luminosité d'un écran du dispositif.

14. Dispositif d'information mobile sans fil alimenté par batterie selon l'une quelconque des revendications 8 à 13, ledit processeur (4) étant également configuré pour exécuter une application de dispositif sur ledit dispositif d'information sans fil capable d'activer un ensemble de tâches liées au transfert sans fil, ledit ensemble de tâches liées au transfert sans fil comprenant une ou plusieurs tâches sélectionnées dans le groupes des tâches consistant à envoyer ou recevoir des courriels, des fils RSS, des mises à jour d'informations, des bulletins météorologiques, des synchronisations de documents, des mises à jour d'antivirus, des mises à jour d'applications de dispositif, des SMS, des mises à jour virales, des relevés de transferts bancaires, des mises à jour d'achats par portefeuilles virtuels ou d'autres types de tâches liées au transfert de données.

**a)** activating a set of wireless transfer related tasks on the mobile wireless information device,

**b)** running a device application on said wireless information device logging:

> an activation period of each wireless transfer related task of said set of wireless transfer related tasks

> an amount of data transferred related to each wireless transfer related task of said set of wireless transfer related tasks

> an activation period of each wireless transfer related task of said set of wireless transfer related tasks

**c)** the device application grouping the set of wireless transfer related tasks into prioritized subgroups of tasks being less or more time critical

**d)** the device application logging a received signal strength indicator (RSSI) of a wireless communication channel relating to the set of wireless transfer related tasks

**e)** the device application defining a wireless transfer scheme based on step a-d such that the communication channel is primarily loaded with the wireless transfer related task being more time critical during periods of low RSSI values whereas the communication channel in periods of high RSSI values may be loaded with the wireless transfer related task being less time critical

# FIG. 1

Start

Request to transfer
data over cellular
network

Is the transfer
time critical?

Yes

Begin
transfer

No

Continuously monitoring the network
sensitivity (Received Signal Strength
Intensity RSSI)

Link quality
X >Y?

Yes

Begin transfer

FIG. 2

# FIG. 3a

———— Low quality periods

– – – High quality periods

# FIG. 3b

FIG. 4

1

2

RF module
3

Modem
5

Processor
4

Memory 8

Battery 6

RAM   7

# FIG. 5

FIG. 6

REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20120129564 A1
- US 20110207509 A1